# FASCICULE DE BREVET EUROPEEN

(11) **EP 3 164 588 B1**
(45) Date de publication et mention de la délivrance du brevet: **02.09.2020**
(21) Numéro de dépôt: 15742367.4
(22) Date de dépôt: 03.07.2015
(51) Int. Cl.: F02K 1/72, F02K 1/70, F01D 25/28

(54) **CADRE ARRIÈRE POUR UNE STRUCTURE D'INVERSEUR DE POUSSÉE À GRILLES DE DÉVIATION**
HINTERRAHMEN FÜR EINE SCHUBUMKEHRERSTRUKTUR MIT ABLENKGITTERN
REAR FRAME FOR A THRUST REVERSER STRUCTURE WITH DIVERSION GRIDS

(30) Priorité: 04.07.2014 FR 1456475
(43) Date de publication de la demande: 10.05.2017
(73) Titulaire: Safran Nacelles, 76700 Gonfreville-l'Orcher (FR)
(72) Inventeur: DUBOIS, Laurent, F-76620 Le Havre (FR); FERROCINO, Laurent, F-76600 Le Havre (FR); HAFIDI, Kamal, F-76380 Canteleu (FR)
(74) Mandataire: Delorme, Nicolas
(86) Numéro de dépôt international: PCT/FR2015/051852
(87) Numéro de publication internationale: WO 2016/001608

(56) Documents cités:
- EP-A1- 2 647 847
- EP-A2- 1 457 659
- EP-A2- 2 466 101
- WO-A1-2013/014350
- WO-A1-2014/044964
- US-A1- 2011 284 660

## Description

La présente invention a trait au domaine des nacelles d'aéronef et concerne les dispositifs d'inversion de poussée. Plus particulièrement, la présente invention concerne un cadre arrière pour une structure d'inverseur de poussée à grilles de déviation pour une nacelle d'un aéronef.

Un avion est mû par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'inversion de poussée.

Plus précisément, une nacelle présente généralement une structure tubulaire comprenant une entrée d'air en amont de turboréacteur, une section médiane destinée à entourer une soufflante du turboréacteur, une section aval abritant les moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à générer par l'intermédiaire des pales de la soufflante en rotation un flux d'air chaud (également appelée flux primaire) issu de la chambre de combustion du turboréacteur, et un flux d'air froid (flux secondaire) qui circulait l'extérieur du turboréacteur à travers un canal annulaire, également appelé veine, formé entre un carénage du turboréacteur et une paroi interne de la nacelle. Les deux flux d'air sont éjectés hors du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue le canal annulaire du flux d'air froid et dirige ce dernier vers l'avant de la nacelle, générant de ce fait une contre-poussée qui vient s'ajouter au freinage des roues de l'avion.

Les moyens mis en œuvre pour réaliser cette réorientation du flux d'air froid varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle il ferme ce passage. Ces capots peuvent remplir une fonction de déviation ou simplement d'activation d'autres moyens de déviation.

Dans le cas d'un inverseur à grilles de déviation, également connu sous le nom d'inverseur à cascade, la réorientation du flux d'air est effectuée par des grilles de déviation associée à des volées d'inversion, le capot n'ayant qu'une simple fonction de coulissage visant à découvrir ou recouvrir les grilles de déviation. Les volets d'inversion forment des portes de blocage activé par le coulissement du capotage engendrant généralement une fermeture du canal annulaire en aval des grilles de manière à optimiser la réorientation du flux d'air froid.

Classiquement, la liaison du moteur à l'aéronef est effectuée au moyen d'une structure de support comprenant deux poutres longitudinales supérieures, classiquement appelées poutres 12 heures en raison de leur position au sommet de la nacelle, deux poutres longitudinales inférieures, classiquement appelées poutres 6 heures en raison de leur position dans la partie inférieure de la nacelle, et un ensemble présentant une forme sensiblement annulaire appelé cadre avant, formé en réalité de deux demi-cadres avant s'étendant chacun entre lesdites poutres longitudinales supérieures et inférieures, et destiné à être fixé à la périphérie du bord aval du carter de la soufflante du moteur.

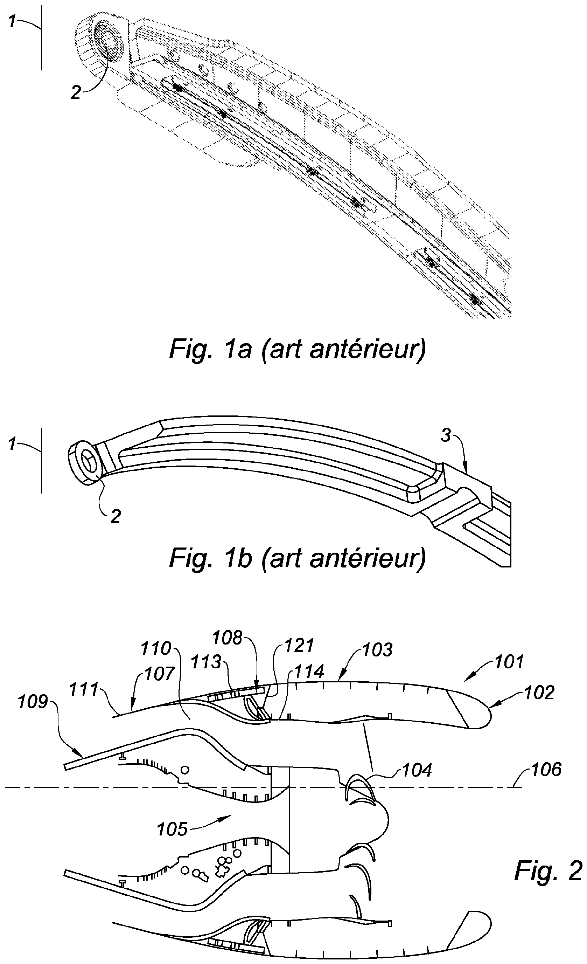

Les grilles d'inversion de poussée sont généralement reliées entre elles à l'aide d'un cadre arrière d'inversion de poussée. Comme représenté sur les figures 1a et 1b, un tel cadre arrière 1 présente généralement une section en «C» (figure 1a) ou en «L» (figure 1b), de manière à augmenter au maximum l'inertie de la structure, et est pourvu de deux extrémités munies chacune d'une chape de fixation 2 reliées pour l'une à la poutre 12H et pour l'autre à la poutre 6 heures. Ce cadre présente un accident de forme 3 pour le passage d'un vérin d'actionnement des grilles d'inversion de poussée dans le sens de l'épaisseur du cadre arrière d'inversion de poussée. Un tel accident de forme impose de réaliser un cadre d'inversion de poussée présentant un encombrement important afin de ne pas affaiblir de manière trop prononcée la structure du cadre arrière d'inversion de poussée, dégradant ainsi ses caractéristiques structurales de résistance aux contraintes auxquelles il est soumis en utilisation. Un tel cadre arrière présente donc un poids important en sus d'un encombrement important. Dans certaines configurations, les grilles sont directement reliées entre elles sans utilisation d'un cadre arrière. Cette solution a l'inconvénient de raccourcir la surface utile des grilles et oblige à allonger les grilles pour avoir une efficacité équivalente.

Un cadre arrière pour une structure d'inverseur de poussée, qui forme l'état de la technique, est divulgué dans WO2014/044964 A1.

Corollairement, des techniques sont développées pour réaliser des cadres arrière plus légers tout en conservant un encombrement important pour permettre la réalisation de l'accident de forme pour le passage du vérin assed'actionnement des grilles d'inversion de poussée et en dégradant le moins possible les caractéristiques structurales des cadres arrière. Ces technologies consistent en l'utilisation de matériaux tels que le composite.

Toutefois, ces technologies ne permettent à ce jour pas la réduction de l'encombrement du cadre arrière d'inversion de poussée alors même qu'une telle réduction pourrait présenter de multiples avantages techniques.

C'est pourquoi il existe un besoin pour un cadre arrière d'inversion de poussée affranchi des inconvénients précités, et affichant notamment un poids et un encombrement réduit, comparativement aux cadres arrière de l'art antérieur.

### Résumé de l'invention

Un des objets de l'invention est de proposer un cadre arrière d'inversion de poussée remarquable en ce qu'il présente un encombrement moindre, et en ce qu'il est plus léger, tout en conservant des caractéristiques structurales satisfaisantes pour l'utilisation qui en est faite dans les dispositifs d'inversion de poussée de nacelles d'aéronefs.

Un ou plusieurs de ces objets sont remplis par les dispositifs selon l'invention.

Selon un premier aspect, l'invention se rapporte à un cadre arrière pour une structure d'inverseur de poussée à grille de déviation d'une nacelle d'un aéronef, la nacelle comprenant au moins deux poutres longitudinales. Le cadre arrière est destiné à être fixé aux deux poutres et à maintenir une ou plusieurs grilles de déviation en coopération avec un cadre avant. Le cadre arrière comporte une section courante de forme sensiblement en bandeau. On entend en particulier par "forme en bandeau" une forme sensiblement plate, et généralement étroite. Les deux poutres longitudinales sont typiquement la poutre 12 heures et la poutre 6 heures.

Le cadre en forme de bandeau fonctionne malgré une inertie beaucoup faible que l'état de l'art car il se comporte comme un tonneau. Les charges radiales des grilles font « gonfler » la structure et sollicitent le cadre seulement en circonférentiel.

Le cadre arrière peut comporter à chacune de ses extrémités des structures de fixation pour la fixation aux deux poutres longitudinales.

Typiquement, la section courante s'étend entre les structures de fixation.

Au moins une des structures de fixation peut comprendre une chape, qui peut avantageusement être intégrée au cadre arrière de telle sorte à ne former qu'une seule et même pièce avec le cadre arrière. Ladite au moins une chape peut se présenter sous la forme d'une double chape, permettant notamment de limiter les contraintes de flexion sur le cadre arrière.

La section courante de forme sensiblement en bandeau peut encore comprendre au moins une section élargie permettant de disposer d'un élément de rigidification entre le cadre arrière et le cadre avant.

Avantageusement, le cadre arrière peut être fabriqué à partir d'un matériau composite. En particulier, les plis de la préforme du cadre arrière peuvent être tissés selon une méthode de tissage 3D.

Par ailleurs, le cadre comprend des fixations de grilles centrées et alignées sur le cadre, permettant une bonne introduction d'efforts.

Selon un deuxième aspect, l'invention se rapporte à une structure d'inverseur de poussée à grille de déviation pour une nacelle d'un aéronef, ladite structure comprenant au moins une grille de déviation et au moins un cadre arrière selon le premier aspect, le dit au moins un cadre arrière étant destiné à maintenir ladite au moins une grille de déviation.

Selon un troisième aspect, l'invention se rapporte à une nacelle comportant une structure d'inverseur de poussée selon le deuxième aspect.

### Brève description des figures

D'autres particularités et avantages de la présente invention apparaîtront, dans la description ci-après de modes de réalisation, en référence aux dessins annexés, dans lesquels:
la figure 1a est une vue partielle, en perspective, d'un cadre arrière, présentant généralement une section en « C », selon l'art antérieur ;
la figure 1b est une vue partielle, en perspective, d'un cadre arrière, présentant généralement une section en « L », selon l'art antérieur ;
la figure 2 est une représentation schématique en coupe longitudinale d'une nacelle ;
la figure 3a et une vue en perspective de l'environnement du cadre arrière, selon un mode de réalisation de l'invention ;
la figure 3b est une vue de détail du cadre arrière, selon un mode de réalisation, dans son environnement ;
la figure 3c est une vue en coupe du cadre arrière, selon un mode de réalisation, dans son environnement ;
la figure 4 est une vue en perspective d'un mode de réalisation d'un cadre arrière selon l'invention.

Sur l'ensemble de ces figures, des références identiques ou analogues désignent des organes ou ensembles d'organes identiques ou analogues.

### Description détaillée

Selon un mode de réalisation représentée à la figure 2, une nacelle 101 comprend une structure amont d'entrée d'air 102, une section médiane 103 entourant une soufflante 104 d'un turboréacteur 105, et une section aval.

La nacelle 101 est de forme tubulaire d'axe longitudinal 106. On entend ici par « longitudinal » une direction sensiblement colinéaire à l'axe longitudinal de la nacelle. On entend ici par « transversal » une direction sensiblement perpendiculaire à l'axe longitudinal de la nacelle.

La section aval comporte de manière connue en soit une structure externe 107, dite OFS, abritant des moyens d'inversion de poussée 108, et une structure interne 109, dite IFS. La nacelle 101 est fixée en aval par l'intermédiaire de tous moyens appropriés, notamment de bielle, à un moyen de suspension, non représenté sur la figure 1, destiné au rattachement de la nacelle 101 sous une aile d'aéronef.

La structure interne 109 est destinée à couvrir une partie aval du turboréacteur 105 s'étendant en aval de la soufflante de sorte à délimiter un canal annulaire pour le passage du flux d'air chaud.

La structure externe 106 et la structure interne 109 définissent également un autre canal annulaire 110 d'écoulement pour le flux d'air froid.

De manière plus précise, les moyens d'inversion de poussée 108 de la section aval comportent au moins un capot mobile 111 recouvrant des grilles de déviation 113. Les grilles de déviation 113 sont reliées à la section médiane et au carter 114 du turboréacteur par l'intermédiaire d'un cadre avant 121.

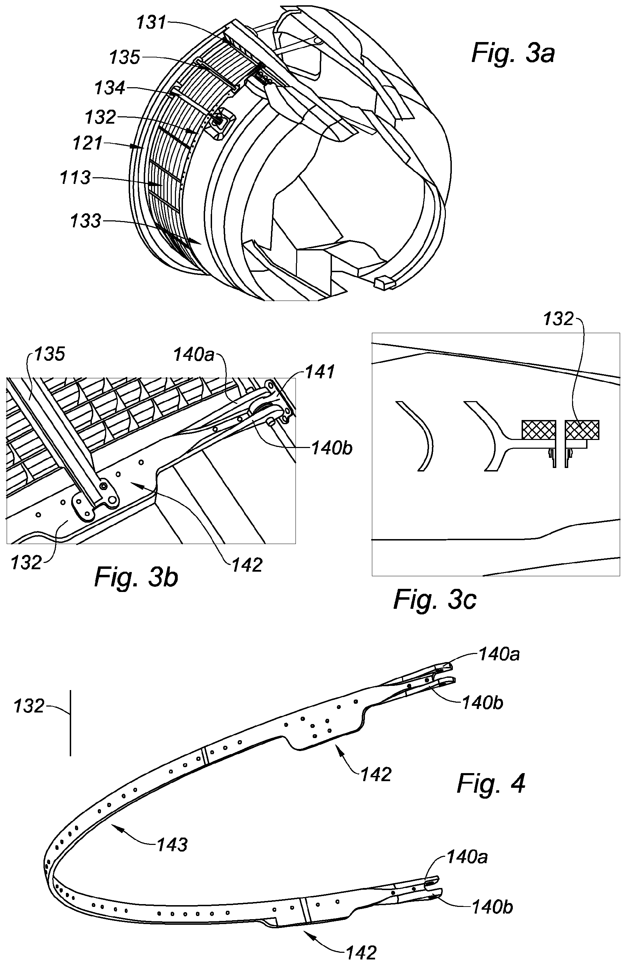

On se réfère maintenant aux figures 3a, 3b, 3c sur lesquelles est illustré un cadre arrière selon un mode de réalisation selon l'invention. La liaison du moteur à l'aéronef est effectuée au moyen d'une structure de support comprenant deux poutres longitudinales supérieures, classiquement appelée poutres 12 heures 131 en raison de leur position au sommet de la nacelle, deux poutres longitudinales inférieures (non visibles sur la figure 2), classiquement appelées poutres 6 heures en raison de leur position dans la partie inférieure de la nacelle, et le cadre avant 132 destiné à être fixé à la périphérie du bord aval du carter de la soufflante du moteur.

Les grilles d'inversion de poussée 113 sont reliées entre elles et maintenues à l'aide du cadre arrière 132. Une vue isolée, en perspective, du cadre arrière 132 est notamment illustrée sur la figure 4. Le cadre arrière 132 est destiné à être fixé entre la poutre 12 heures et la poutre 6 heures. En particulier, le cadre arrière 132 comporte à chacune de ses extrémités des structures de fixation 140 pour permettre la fixation aux deux poutres longitudinales. Comme représenté sur la figure 3a, les structures de fixation 140 comprennent par exemple une double chape 140a, 140b, à chaque extrémité du cadre arrière, apte à coopérer avec un kit de gestion de contact 141, disposé sur les poutres 6 heures et 12 heures. Par kit de gestion de contact, on entend en particulier un ensemble de pièces intermédiaires entre les poutres et le cadre arrière. Dans le mode de réalisation illustré sur les figures 3b et 4, la double chape 140a, 140b est intégrée au cadre arrière de telle sorte à ne former qu'une seule et même pièce avec le cadre arrière.

Le cadre arrière 132 comporte une section courante 143 de forme sensiblement en bandeau. La section courante 143 est de forme sensiblement plate et étroite. Ainsi, grâce à la forme de la section courante, le cadre arrière ne présente plus d'accident de forme pour le passage d'un vérin d'actionnement 134 des grilles d'inversion de poussée, et affiche un encombrement et un poids réduits.

Dans le mode de réalisation illustré sur les figures 3 et 4, le cadre arrière la section courante 143 de forme sensiblement en bandeau comprend des sections élargies 142. Il est ainsi possible de disposer un élément de rigidification 135, tel un rail secondaire, entre le cadre arrière et le cadre avant, afin de rigidifier la structure.

Le cadre arrière peut être fabriqué à partir d'un matériau composite. En particulier, les plis de la préforme du cadre arrière peuvent être tissés selon une méthode de tissage 3D.

## Revendications

1. Cadre arrière (132) pour une structure d'inverseur de poussée à grille de déviation d'une nacelle (101) d'un aéronef, la nacelle comprenant au moins deux poutres longitudinales, le cadre arrière étant destiné à être fixé aux deux poutres et à maintenir une ou plusieurs grilles de déviation (113) en coopération avec un cadre avant (121), **caractérisé en ce qu'**il comporte une section courante (143) de forme sensiblement en bandeau, la forme sensiblement en bandeau étant une forme sensiblement plate, et généralement étroite.

2. Cadre arrière selon la revendication précédente, comportant à chacune de ses extrémités des structures de fixation (140) pour la fixation aux deux poutres longitudinales.

3. Cadre arrière selon la revendication 2, dans lequel la section courante s'étend entre les structures de fixation (140).

4. Cadre arrière selon l'une quelconque des revendications 2 à 3, dans lequel au moins une des structures de fixation comprend une chape (140a, 140b).

5. Cadre arrière selon la revendication 4, dans lequel ladite au moins une chape est intégrée au cadre arrière de telle sorte à ne former qu'une seule et même pièce avec le cadre arrière.

6. Cadre arrière selon l'une quelconque des revendications 4 à 5, dans lequel ladite au moins une chape se présente sous la forme d'une double chape (140a, 140b).

7. Cadre arrière selon l'une quelconque des revendications précédentes, dans lequel la section courante (143) de forme sensiblement en bandeau comprend au moins une section élargie (142) permettant de disposer un élément de rigidification (135) entre le cadre arrière et le cadre avant.

8. Cadre arrière selon l'une quelconque des revendications précédentes fabriqué à partir d'un matériau composite.

9. Structure d'inverseur de poussée à grille de déviation pour une nacelle (101) d'un aéronef, ladite structure comprenant au moins une grille de déviation (113) et au moins un cadre arrière (132) selon l'une quelconque des revendications précédentes, le dit au moins un cadre arrière étant destiné à maintenir ladite au moins une grille de déviation.

10. Nacelle (101) comportant une structure d'inverseur de poussée selon la revendication 9.

## Patentansprüche

1. Hinterrahmen (132) für eine Schubumkehrstruktur mit Ablenkgitter einer Gondel (101) eines Luftfahrzeugs, wobei die Gondel mindestens zwei Längsträger umfasst, wobei der Hinterrahmen dazu bestimmt ist, an den beiden Trägern befestigt zu werden, und ein oder mehrere Ablenkgitter (113) in Zusammenwirkung mit einem Vorderrahmen (121) zu halten, **dadurch gekennzeichnet, dass** er eine übliche Sektion (143) in Form von im Wesentlichen einem Band beinhaltet, wobei die Form von im Wesentlichen einem Band eine im Wesentlichen ebene, und im Allgemeinen schmale Form ist.

2. Hinterrahmen nach dem vorstehenden Anspruch, der an jedem seiner Enden Befestigungsstrukturen (140) für die Befestigung an den beiden Längsträgern beinhaltet.

3. Hinterrahmen nach Anspruch 2, wobei sich die übliche Sektion zwischen den Befestigungsstrukturen (140) erstreckt.

4. Hinterrahmen nach einem der Ansprüche 2 bis 3, wobei mindestens eine der Befestigungsstrukturen einen Gabelkopf (140a, 140b) umfasst.

5. Hinterrahmen nach Anspruch 4, wobei der mindestens eine Gabelkopf derart in den Hinterrahmen integriert ist, um mit dem Hinterrahmen nur ein einziges und gleiches Teil zu bilden.

6. Hinterrahmen nach einem der Ansprüche 4 bis 5, wobei sich der mindestens eine Gabelkopf in der Form eines Doppelgabelkopfes (140a, 140b) darstellt.

7. Hinterrahmen nach einem der vorstehenden Ansprüche wobei die übliche Sektion (143) in Form von im Wesentlichen einem Band mindestens eine erweiterte Sektion (142) umfasst, die es ermöglicht, ein Versteifungselement (135) zwischen dem Hinterrahmen und dem Vorderrahmen anzuordnen.

8. Hinterrahmen nach einem der vorstehenden Ansprüche, der aus einem Verbundwerkstoff gefertigt ist.

9. Schubumkehrstruktur mit Ablenkgitter für eine Gondel (101) eines Luftfahrzeugs, wobei die Struktur mindestens ein Ablenkgitter (113) und mindesten einen Hinterrahmen (132) nach einem der vorstehenden Ansprüche umfasst, wobei der mindestens eine Hinterrahmen dazu bestimmt ist, das mindestens eine Ablenkgitter zu halten.

10. Gondel (101), die eine Schubumkehrstruktur nach Anspruch 9 beinhaltet.

## Claims

1. A rear frame (132) for a thrust reverser structure with cascade vane of a nacelle (101) of an aircraft, the nacelle comprising at least two longitudinal beams, the rear frame being configured to be fastened to the two beams and to hold one or several cascade vane(s) (113) in cooperation with a front frame (121), **characterized in that** it includes a common section (143) with a substantially headband-like shape, the substantially headband-like shape being a substantially flat, and generally narrow shape.

2. The rear frame according to the preceding claim, including at each of its ends thereof fastening structures (140) for fastening to the two longitudinal beams.

3. The rear frame according to claim 2, wherein the common section extends between the fastening structures (140).

4. The rear frame according to any one of claims 2 to 3, wherein at least one of the fastening structures comprises a clevis (140a, 140b).

5. The rear frame according to claim 4, wherein said at least one clevis is integrated into the rear frame so as to form only one single piece with the rear frame.

6. The rear frame according to any one of claims 4 to 5, wherein said at least one clevis is in the form of a twin clevis (140a, 140b).

7. The rear frame according to any one of the preceding claims, wherein the common section (143) with a substantially headband-like shape comprises at least one enlarged section (142) allowing disposing a stiffening element (135) between the rear frame and the front frame.

8. The rear frame according to any one of the preceding claims made from a composite material.

9. A thrust reverser structure with cascade vane for a nacelle (101) of an aircraft, said structure comprising at least one cascade vane (113) and at least one rear frame (132) according to any one of the preceding claims, said at least one rear frame being intended to hold said at least one cascade vane.

10. A nacelle (101) including a thrust reverser structure according to claim 9.
